# EUROPEAN PATENT SPECIFICATION

(11) **EP 0 657 331 B1**
(45) Date of publication and mention of the grant of the patent: **07.04.1999**
(21) Application number: 93119903.8
(22) Date of filing: 09.12.1993
(51) Int. Cl.: B60S 1/38

(54) **Method of producing wiper blade rubber and wiper blade rubber produced thereby**
Verfahren zur Herstellung eines Wischerblattgummis und so hergestellter Wischerblattgummi
Procédé pour la fabrication d'une lame caoutchouc d'essuie-glace et lame caoutchouc d'essuie-glace produite selon cette méthode

(43) Date of publication of application: 14.06.1995
(73) Proprietor: FUKOKU Co., Ltd., Ageo-shi, Saitama (JP)
(72) Inventor: Ichise, Yoshiju, Ageo-shi, Saitama (JP)
(74) Representative: Glawe, Delfs, Moll & Partner

(56) References cited:
- EP-A- 0 516 470
- US-A- 3 035 297
- US-A- 4 103 385

## Description

The present invention relates to a method of producing a wiper rubber blade which is excellent in the wiping ability, the durability and also in the productivity.

### Description of the Related Art

A wiper rubber blade is generally swept across the glass surface of a vehicle to wipe out the raindrops or the like on the windshield. Therefore wiper rubber blades having a low frictional resistance and difficult to abrade are to be desired.

Since a wiper rubber blade is disposed on the outside of a vehicle, it is also required to have a resistance to ozone and a resistance to weather.

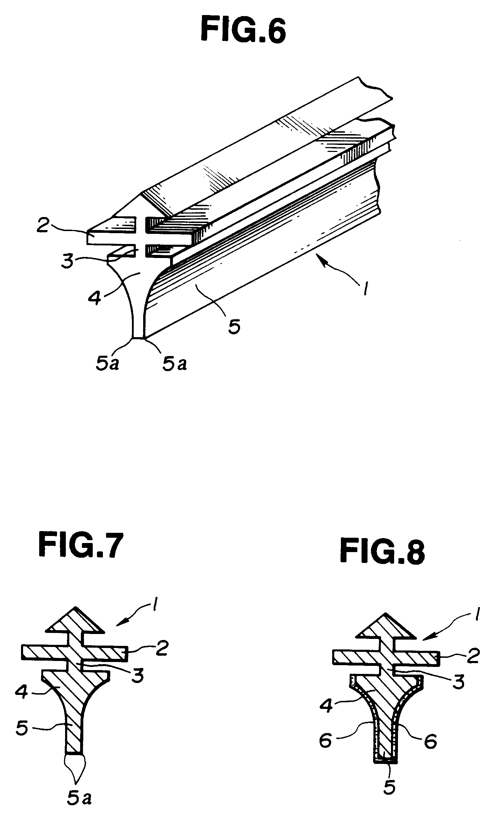

Fig. 6 is a perspective view of a conventional wiper rubber blade. In Fig. 6, the reference numeral 1 represents a wiper rubber blade, and 2 a base end portion which engages a holding fixture (not shown). The reference numeral 3 represents a neck portion, 4 a rocking portion, 5 a lip portion and 5a the edge thereof.

As the wiper rubber blade 1, a molded product of natural rubber or synthetic rubber is used. In a wiper rubber blade having natural rubber as the base material, the frictional resistance is lowered and the abrasion resistance is improved by subjecting the surface of the rubber blade to a chlorination treatment or a fluorination treatment, or by forming a coating layer 6 on the surface, as shown in Fig. 8.

In a wiper rubber blade having synthetic rubber such as ethylene propylene rubber (EPDM) as the base material, although the weathering resistance is excellent, since the effect of a chlorination treatment on the reduction of the frictional resistance cannot be expected, it is subjected to a fluorination treatment so as to lower the frictional resistance and improve the abrasion resistance.

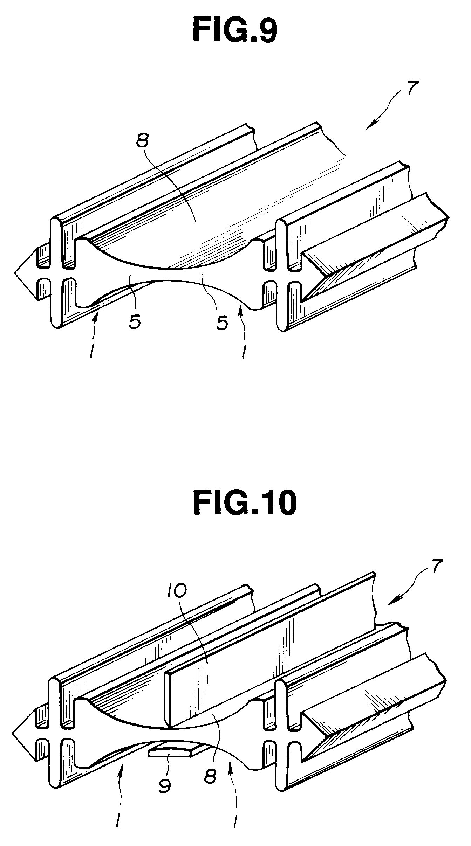

In order to enhance the productivity of a wiper rubber blade, what is called a tandem wiper rubber blade such as that shown in Fig. 9 has been proposed. The tandem rubber blade 7 shown in Fig. 9 is composed of two wiper rubber blades 1 united with each other at the lip portions 5. The surface of a common lip portion 8 of the tandem wiper rubber blade 7 is subjected to a coating treatment such as described above so as to provide a coating film.

The common lip portion 8 of the tandem wiper rubber blade 7 subjected to the coating treatment is mounted on a bearer 9, and the tandem wiper rubber blade 7 is separated into two wiper rubber blades 1 by pressing a long knife blade 10 against the center portion of the common lip portion 8, as shown in Fig. 10. Such a treatment is called a "before-cutting-coating treatment".

In contrast, in what is called an "after-cutting-coating treatment", the common lip portion 8 of the tandem wiper rubber blade 7 which has not been subjected to a coating treatment is mounted on the bearer 9, and the tandem wiper rubber blade 7 is separated into two wiper rubber blades 1 by pressing the long knife blade 10 against the center portion of the common lip portion 8. After the cutting step, the surface of the lip portion 5 of each wiper rubber blade 1 is subjected to a coating treatment, that is, for example, a coating material is sprayed onto the surface.

There are, however, some problems in a conventional wiper rubber blade and a conventional method of producing a wiper rubber blade. Especially, in the before-cutting-coating treatment, since the coating film 6 is hard, it is impossible to cut the common lip portion 8 by the knife blade 10 at a high speed, and the edge of the knife blade 10 is abraded at the cutting step.

On the other hand, in the after-cutting-coating treatment, since the coating film 6 is also formed on the end portion of the lip portion 5, as shown in Fig. 8, the wiping ability of the wiper rubber blade 1 is deteriorated.

Document EP-A-0516470 discloses a method for producing tandem wiper rubber blades comprising broad V-shaped grooves on both sides of the common lip portion, the grooves being generated by blades during the extrusion process to provide an easy severing of the tandem rubber blade into two separate rubber blades. However, there is not disclosed to subject the rubber blades to any coating treatment.

It is known from document US-A-4103385 to produce wiper rubber blades by providing a tandem wiper rubber blade which is composed of two wiper rubber blades integrally united with each other at a common lip portion, applying a coating material to said common lip portion and thereafter longitudinally cutting the tandem wiper rubber blade so as to obtain two separated wiper rubber blades. A manufacturing process of this manner implies the disadvantage that it is impossible to cut the common lip portion by the knife blade at a high speed, and the edge of the knife blade is abraded by the hard coating material during the cutting step.

### SUMMARY OF THE INVENTION

Accordingly, it is an object of the present invention to eliminate the above-described problems in the related art and to provide a method of producing a wiper rubber blade which does not abrade the edge of a knife blade and which is capable of maintaining a good wiping ability even after forming a coating film.

To achieve this aim, according to the present invention, there is provided a method of producing a wiper rubber blade comprising the steps of:
providing a tandem wiper rubber blade which is composed of two wiper rubber blades integrally united with each other at their lip portions so as to form a common lip portion, forming notches on both sides of said common lip portion by cutting with knives, and thereafter applying a coating material to said common lip portion.

Since two wiper rubber blades are united with each other at the thin joint portion of the lip portions, it is easy to tear the common lip portion. In addition, it is possible to prevent the edges of the lip portions from being broken or deformed during production or transportation.

According to a method of producing a wiper rubber blade of the present invention, since notches are provided on both sides of a common lip portion and thereafter a coating material is applied to the common lip portion, there is no fear of damaging the edge of a knife blade and it is possible to maintain a good wiping ability.

The above and other objects, features and advantages of the present invention will become clear from the following description of the preferred embodiments thereof, taken in conjunction with the accompanying drawings.

### BRIEF DESCRIPTION OF THE DRAWINGS

Fig. 1 is a perspective view of a wiper rubber blade;
Fig. 2 is a detailed sectional view of the common lip portion of the wiper rubber blade shown in Fig. 1;
Fig. 3 is a sectional side elevational view of an embodiment of a method of producing a wiper rubber blade according to the present invention;
Fig. 4 is a schematic perspective view of the embodiment shown in Fig. 3, explaining the step of applying a coating material to the common lip portion;
Fig. 5 is a schematic perspective view of the wiper rubber blade shown in Figs. 1 and 3, explaining the step of separating the two wiper rubber blades;
Fig. 6 is a perspective view of a conventional wiper rubber blade;
Fig. 7 is a sectional elevational view of the conventional wiper rubber blade shown in Fig. 6;
Fig. 8 is a sectional view of a conventional wiper rubber blade with a coating material applied thereto;
Fig. 9 is a schematic perspective view of a conventional tandem wiper rubber blade; and
Fig. 10 is a schematic perspective view of a conventional method of producing a wiper rubber blade.

### DESCRIPTION OF THE PREFERRED EMBODIMENTS

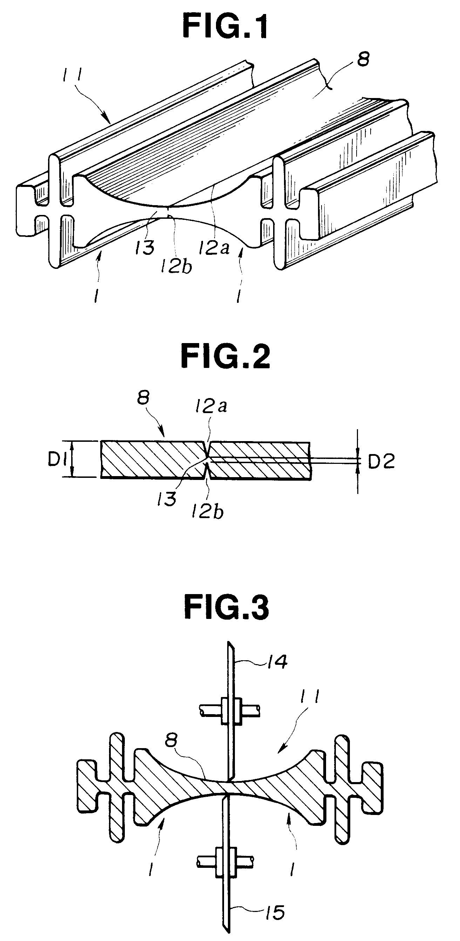

Fig. 1 is a perspective view of a wiper rubber blade. In Fig. 1, the reference numeral 11 represents a tandem wiper rubber blade, and 12a and 12b notches provided on both sides of a common lip portion 8 of the tandem wiper rubber blade 11. Fig. 2 shows the enlarged notches. As shown in Fig. 2, if it is assumed that the thickness D1 of the common lip portion 8 is, for example, 0.6 to 1.0 mm, the thickness D2 of the joint portion 13 formed at the center portion of the common lip portion 8 by the notches 12a and 12b is, for example, 0.005 mm.

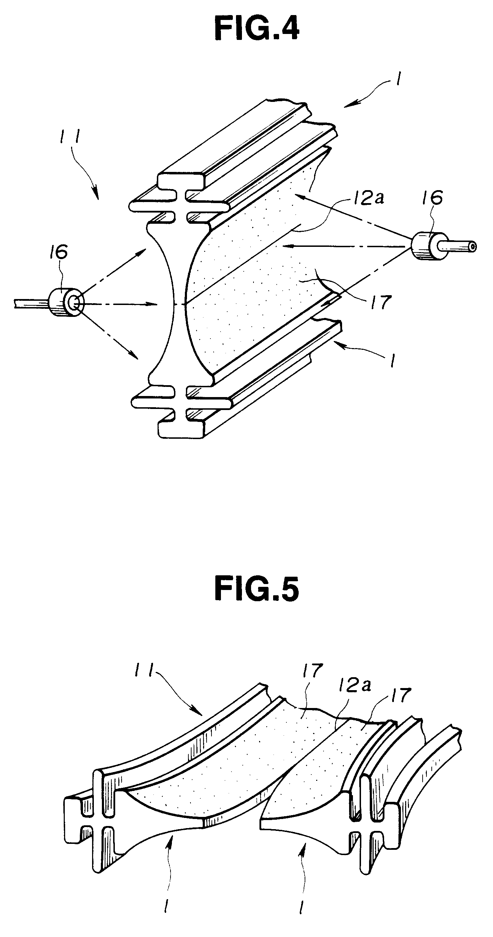

Since the thickness D2 of the joint portion 13 at the center portion of the tandem wiper rubber blade 11 which is provided with the notches 12a and 12b on both sides of the common lip portion 8 is so thin as, for example, 0.005 mm, it is easy to tear the tandem wiper rubber blade 11 with the hands into two wiper rubber blades 1, as shown in Fig. 5.

In addition, since no special jig is necessary, it is possible to tear the tandem wiper rubber blade 11 at a shop or by a customer himself. Furthermore, it is possible to prevent the edges 5a of the lip portions 5 of the wiper rubber blades 1 (see Fig. 1) from being broken or deformed during transportation. Since the two wiper rubber blades 1 are united at the joint portion 13, the tandem wiper rubber blade 11 is resistant to torsion, and facilitates the application of a coating material and handling such as packing.

Fig. 3 is a sectional side elevational view of an embodiment of a method of producing a wiper rubber blade according to the present invention. In Fig. 3, the reference numeral 14 represents an upward rotary knife and 15 a downward rotary knife. The tandem wiper rubber blade 11 is fixed by guide brackets (not shown).

By the upward rotary knife 14 and the downward rotary knife 15, the notches 12a and 12b are formed on both sides of the common lip portion 8, as described above. A coating material 17 is then applied by coating equipments 16 to both sides of the common lip portion 8 of the tandem wiper rubber blade 11 provided with the notches 12a, 12b, as shown in Fig. 4. At this time, since the coating material 17 does not enter the notches 12a and 12b, the edges 5a of the lip portions 5 of the wiper rubber blades 1 is not coated with the coating material 17.

As the coating material 17, nylon, graphite, molybdenum, teflon, etc. are usable. After the coating step, it is easy to tear the tandem wiper rubber blade 11 by a separating mechanism (not shown) or with the hands into the two wiper rubber blades 1, as shown in Fig. 5.

As explained above in detail, since a tandem wiper rubber blade is composed of two wiper rubber blades united at the thin joint portion of the common lip portion, it is easy to tear the tandem wiper rubber blade with the hands. In addition, since no special jig is necessary, it is possible to tear the tandem wiper rubber blade 11 at a shop or by a customer himself. Furthermore, it is possible to prevent the edges of the lip portions of the wiper rubber blades from being broken or deformed during transportation. Handling of the tandem wiper rubber blade such as such as packing is also facilitated.

According to a method of producing a wiper rubber blade of the present invention, since the common lip portions of the tandem wiper rubber blade is provided with notches by an upward rotary knife and a downward rotary knife at the first step, the edges of the rotary knives do not come into contact with each other. It is therefore possible to prevent the edges of the rotary knives from being abraded. Since a coating material is applied to the surfaces of the common lip portion at the second stage, there is no fear of the edges of knife blades being abraded by the coating material. In addition, the coating material does not adhere to the edges of the lip portions, a good wiping ability is maintained.

While there has been described what are at present considered to be preferred embodiments of the invention, it will be understood that various modifications may be made thereto, and it is intended that the appended claims cover all such modifications as fall within the scope of the invention.

## Claims

1. A method of producing a wiper rubber blade comprising the steps of: providing a tandem wiper rubber blade (11) which is composed of two wiper rubber blades (1) integrally united with each other at their lip portions so as to form a common lip portion (8); forming notches (12a, 12b) on both sides of said common lip portion (8) by cutting with knives (14, 15); and thereafter applying a coating material to said common lip portion (8).

2. The method as claimed in claim 1, comprising the further step of tearing said common lip portion (8) along said notches (12a, 12b) so as to obtain two separated wiper rubber blades (1) each having a lip portion with an uncoated edge surface (5a).

3. The method as claimed in claim 1 or 2, wherein said notches (12a, 12b) are formed by cutting the side surfaces of said common lip portion (8) by an upper rotary knife (14) and a lower rotary knife (15).

4. The methode as claimed in claim 1, wherein said coating material is selected from the group consisting of graphite, molybdenum, nylon and polytetrafluoroethylene.

## Patentansprüche

1. Verfahren zur Herstellung eines Wischergummiblattes mit den Schritten: Vorsehen eines Tandem-Wischergummiblatts (11), welches aus zwei Wischergummiblättern (1) besteht, die an ihren Lippenabschnitten einstückig miteinander zusammenhängen derart, daß ein gemeinsamer Lippenabschnitt (8) gebildet wird; Ausbilden von Kerben (12a, 12b) auf beiden Seiten des gemeinsamen Lippenabschnitts (8) durch Einschneiden mit Messern (14, 15); und anschließendes Aufbringen eines Beschichtungsmaterials auf den gemeinsamen Lippenabschnitt (8).

2. Verfahren nach Anspruch 1,
mit den weiteren Schritten des Auseinanderreißens des gemeinsamen Lippenabschnitts (8) entlang den Kerben (12a, 12b) derart, so daß zwei getrennte Wischergummiblätter (1) erhalten werden, von denen jedes einen Lippenabschnitt mit einer unbeschichteten Stirnfläche (5a) aufweist.

3. Verfahren nach Anspruch 1 oder 2,
bei dem die Kerben (12a, 12b) gebildet werden durch Einschneiden der Seitenflächen des gemeinsamen Lippenabschnitts (8) mit einem oberen Drehmesser (14) und einem unteren Drehmesser (15).

4. Verfahren nach Anspruch 1,
bei dem das Beschichtungsmaterial ausgewählt ist aus der Gruppe bestehend aus Graphit, Molybdän, Nylon und Polytetrafluorethylen.

## Revendications

1. Procédé de fabrication d'une lame d'essuie-glace en caoutchouc, comprenant les étapes de : préparation d'une lame d'essuie-glace en caoutchouc en tandem (11) qui est composée de deux lames d'essuie-glace en caoutchouc (1) solidairement reliées l'une à l'autre à l'endroit de leurs parties de lèvre de façon à former une partie de lèvre commune (8) ; la formation d'entailles (12a,12b) sur les deux côtés de ladite partie de lèvre commune (8) par coupe au moyen de lames coupantes (14, 15) ; puis application d'une matière de revêtement à ladite partie de lèvre commune (8).

2. Procédé selon la revendication 1, comprenant l'étape supplémentaire de déchirure de ladite partie de lèvre commune (8) le long des dites entailles (12a, 12b) de façon à obtenir deux lames d'essuie-glace en caoutchouc séparées (1) ayant chacune une partie de lèvre avec une surface de bord non revêtue (5a).

3. Procédé selon la revendication 1 ou 2, dans lequel lesdites entailles (12a,12b) sont formées par coupe des surfaces latérales de ladite partie de lèvre commune (8) au moyen d'une lame coupante rotative supérieure (14) et d'une lame coupante rotative inférieure (15).

4. Procédé selon la revendication 1, dans lequel ladite matière de revêtement est choisie dans le groupe comprenant le graphite, le molybdène, le nylon et le polytétrafluoroéthylène.
